# FASCICULE DE BREVET EUROPEEN

(11) **EP 0 496 667 B1**
(45) Date de publication et mention de la délivrance du brevet: **01.03.1995**
(21) Numéro de dépôt: 92400156.3
(22) Date de dépôt: 22.01.1992
(51) Int. Cl.: H02G 3/04

(54) **Dispositif de fermeture de l'extrémité d'un profilé**
Vorrichtung zum Verschliessen eines Endes eines Hohlprofilstabes
End closure device for a profile member

(30) Priorité: 23.01.1991 FR 9100725
(43) Date de publication de la demande: 29.07.1992
(73) Titulaire: P.G.E.P. PROFESSIONAL GENERAL ELECTRONIC PRODUCTS Société Anonyme, 92400 Courbevoie (FR)
(72) Inventeur: Nudelmont, Jean-Claude, F-92290 Neuilly Sur Seine (FR); Gagliardi, Amédée, F-78270 Cravent (FR)
(74) Mandataire: Loyer, Bertrand

(56) Documents cités:
- DE-U- 8 518 566
- US-A- 3 840 140

## Description

La présente invention concerne les installations mettant en oeuvre des profités, par exemple en aluminium.

De telles installations sont par exemple destinées à la distribution de l'électricité dans un bâtiment. Il est en effet connu de positionner des profilés le long de murs pour le passage des lignes électriques sans faire de saignées dans le mur.

Les profilés mis en oeuvre ont une section en U dont on positionne le fond contre le mur afin que les ailes soient perpendiculaires au mur et que la face ouverte soit ainsi dirigée vers l'avant.

Les fils électriques sont alors mis dans lesdits profilés et l'on ferme la face ouverte par des blocs encliquetables assurant des fonctions telles que prises ou interrupteurs. On finit de fermer la face ouverte avec des baguettes de finition.

Il se pose très souvent dans ces installations le problème de fermer de manière sûre et esthétique l'extrémité du profilé.

En effet, les dispositifs actuellement connus sont souvent encliquetés dans le profilé ce qui les rend facilement arrachables et ne permet pas une belle finition.

De tels dispositifs de fermeture selon l'art antérieur sont par exemple décrits dans les documents DE-U-8518566 et US.A-3840140.

La présente invention a alors pour but de proposer un dispositif de fermeture qui soit esthétique tout en étant simple à monter et à démonter mais non arrachable. A cet effet, le dispositif de fermeture de l'extrémité d'un profilé à section en U ayant un fond et deux ailes pourvues près de la face ouverte du profilé d'un rail tourné vers ledit fond, selon l'invention, est caractérisé en ce qu'il comporte un embout portant sur un côté inférieur deux ergots et sur son côté supérieur deux tétons de positionnement et deux crochets ayant des rainures et une pièce d'arrêt formée par un axe.

Suivant d'autres caractéristiques de l'invention:
- l'axe est maintenu dans sa position d'arrêt par un élément de fermeture de la face ouverte du profilé;
- les ergots présentent des plots tournés vers le bas s'engageant dans des crevés du fond du profilé;
- les tétons de positionnement sont parallélépipédiques et s'engagent sous les rails;
- les crochets sont espacés d'une distance telle qu'ils puissent se positionner à l'extérieur desdits rails contre le retour dirigé vers le fond du profilé qu'ils présentent;
- l'axe est positionné dans des logements formés par les rainures des crochets et par des interruptions de même largeur des rails.

La présente invention sera mieux comprise et d'autres avantages de celle-ci ressortiront de la description du dessin joint sur lesquels :
La figure 1 représente les différentes pièces mises en oeuvre dans l'invention,
Les figures 2, 3, 4 montrent différentes phases du montage.

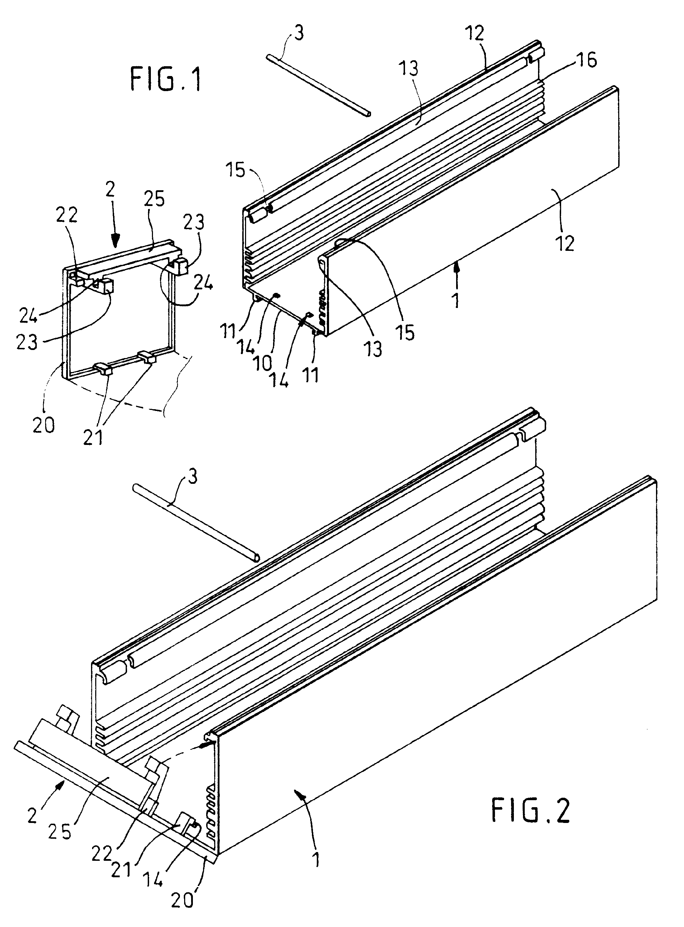

On voit à la figure 1, le profilé 1 en aluminium à section en U. Le fond 10 du profilé est destiné à être fixé sur un support tel qu'il peut également être positionné sur un rail grâce aux glissières 11 prévues sur la face externe.

Le profilé 1 comporte également deux ailes 12 qui seront perpendiculaires au mur lorsque le profilé sera en place, de manière usuelle, ces ailes sont pourvues de nervures 16 sur leur face interne.

Près de la face ouverte du profilé, les ailes 12 présentent un rail 13 tourné vers le fond 10, ayant une face parallèle au fond 10 positionnée près du bord de l'aile 12 et un retour en direction du fond 10.

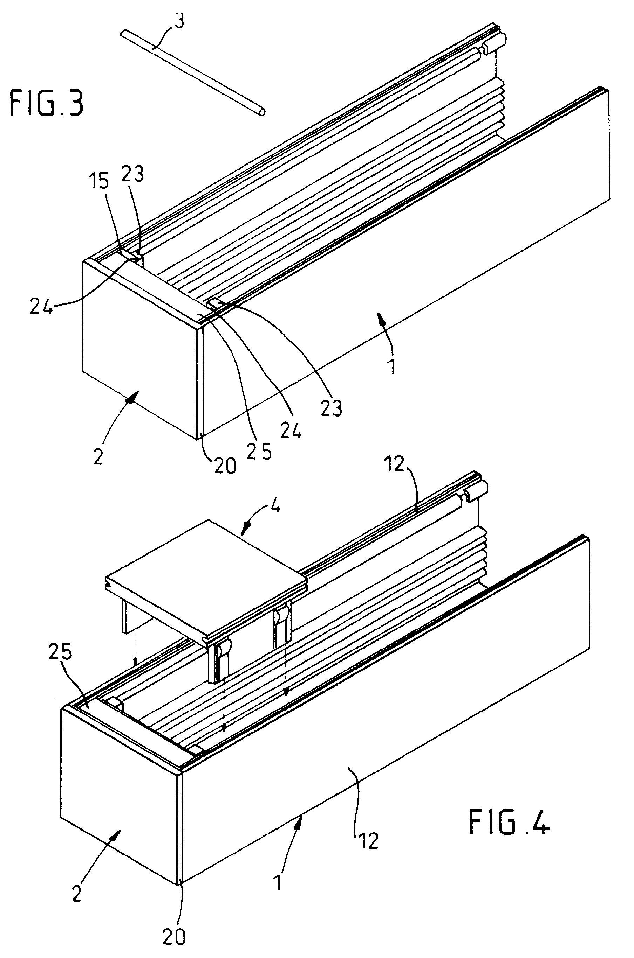

Le dispositif de fermeture suivant l'invention comporte un embout 2 de dimension telle qu'il recouvre totalement et exactement l'extrémité du profilé. Comme on peut le voir aux figures 3, 4 la face de l'embout 2 destinée à être tournée vers l'extérieur est lisse, on pourrait bien entendu prévoir d'agrémenter cette face de dessins afin de la décorer. Il est également possible de prévoir une ouverture afin de raccorder un tube au profilé.

Sur sa face tournée vers l'intérieur du profilé 1, l'embout 2 présente une jupe périphérique 20 de faible hauteur destinée à être positionnée en continuité de chacune des parois du profilé.

Deux ergots 21 sont positionnés sur le côté inférieur de l'embout et s'étendent à distance de l'extrémité de la jupe 20.

Près du côté supérieur ,sont prévus deux tétons 22 de positionnement. Ces tétons sont parallélépipédiques et sont d'une dimension telle qu'ils puissent s'engager sous les rails 13 du profilé. Le côté supérieur de l'embout porte également deux crochets 23 dirigés vers le haut, dont la rainure 24 est éloignée de la jupe d'une dimension plus importante que la longueur des tétons 22.

L'embout 2 présente encore une paroi 25 s'étendant le long du côté supérieur, dans le même plan que lajupe et qui recouvre la partie des crochets 23 située entre ladite jupe 20 et la rainure 24.

Cette paroi 25 a une dimension inférieure à celle de l'embout 2 afin de se positionner avec jeu entre les ailes 12 du profilé 1.

Le profilé 1 présente à son extrémité des moyens pour la mise en place de l'embout 2. Ces moyens sont formés par des crevés 14 du fond 10 de dimension égale à celle des plots dirigés vers le bas des ergots 21 et par des interruptions 15 des rails 13 à une distance de l'extrémité du profilé égale à la distance séparant les rainures 24 des crochets 23 de la jupe 20. Le dispositif selon l'invention comporte également un axe 3 de longueur telle que l'on puisse le positionner transversalement entre les ailes 12 du profilé et de diamètre légèrement inférieur aux largeurs des rainures 24 et interruptions 15 des rails 13.

Comme on peut le voir à la figure 2, on commence la mise en place du dispositif en positionnant l'embout 2 avec: le côté inférieur de la jupe 20 contre l'extrémité du fond 10 du profilé puis on le fait basculer afin que les plots dirigés vers le bas des ergots 21 pénètrent dans les crevés 14.

En poursuivant le basculement de l'embout 2, les tétons de positionnement 22 viennent se mettre en place sous les rails 13, tandis que les crochets 23 se positionnent à l'extérieur desdits rails 13, contre le retour dirigé vers le fond de ceux-ci, l'espacement entre lesdits crochets 23 étant prévu à cet effet.

Lorsque l'embout 2 est ainsi mis en place, comme visible à la figure 3, les rainures 24 des crochets 23 et les interruptions 15 des rails 3 sont alignés. L'axe 3 est alors mis en place dans les logements formés par ces rainures 24 et interruptions 15, ce qui forme une pièce d'arrêt efficace pour empêcher un arrachement de l'embout 2.

L'axe 3 a un diamètre tel qu'il puisse être logé dans ces logements par une pression que l'on peut exercer à la main.

Le maintien de l'axe 3 est de plus assuré par les éléments 4 destinés à fermer la face ouverte du profilé dont la forme est telle que le premier de ceux-ci puisse recouvrir parfaitement le logement de l'axe 3. Ainsi cet axe 3 assurant l'arrêt du dispositif de fermeture en position ne pourra jamais sortir intempestivement de son logement même si son diamètre a été prévu un peu faible ou s'il est usé.

On saura compris que le dispositif suivant l'invention est toujours parfaitement positionné par la mise en oeuvre des ergots 21 et des tétons 22, ce qui permet d'obtenir une bonne esthétique puisque la jupe 20 est toujours alignée avec les faces du profilé et que, de plus il ne pourra être arraché grâce à la présente de l'axe 3 maintenu en toutes circonstances par l'élément 4 de fermeture de la face ouverte.

Le dispositif de fermeture peut toutefois être démonté lorsque cela s'avère nécessaire en ôtant ou en faisant coulisser les éléments 4 de fermeture de la face ouverte puis en enlevant l'axe 3 avant de faire basculer l'embout 2.

## Revendications

1. Dispositif de fermeture de l'extrémité d'un profilé (1) à section en U avant un fond (10) et deux ailes (12) pourvues près de la face ouverte du profilé d'un rail (13) tourné vers ledit fond (10), caractérisé en ce qu'il comporte un embout (2) portant sur son côté inférieur deux ergots (21) et sur son côté supérieur deux tétons (22) de positionnement et deux crochets (23) avant des rainures (24) et une pièce d'arrêt formée par un axe (3) venant s'engager dans lesdites rainures.

2. Dispositif selon la revendication 1, caractérisé en ce que l'axe (3) est maintenu dans sa position d'arrêt par un élément (4) de fermeture de la face ouverte du profilé (1).

3. Dispositif selon la revendication 1 ou 2, caractérisé en ce que les ergots (21) présentent des plots tournés vers le bas s'engageant dans des crevés (14) du fond (10) du profilé (1).

4. Dispositif selon l'une des revendications 1 à 3, caractérisé en ce que les tétons (22) de positionnement sont parallélépipédiques et s'engagent sous les rails (13).

5. Dispositif selon l'une quelconque des revendications précédentes, caractérisé en ce que les crochets (23) sont espacés d'une distance telle qu'ils puissent se positionner à l'extérieur desdits rails (13) contre le retour dirigé vers le fond (10) du profilé qu'ils présentent.

6. Dispositif selon l'une quelconque des revendications précédentes, en ce que l'axe (3) est positionné dans des logements formés par les rainures (24) des crochets (23) et par des interruptions (15) de même largeur des rails (13).

## Patentansprüche

1. Vorrichtung zum Verschließen des Endes eines Profiles (1) U-förmigen Querschnitts mit einem Boden (10) und zwei Schenkeln (12), die nahe der offenen Seite des Profiles mit einer in Richtung auf den Boden (10) gebogenen Schiene (13) ausgestattet sind, **dadurch** **gekennzeichnet, daß** die Vorrichtung ein Ansatzstück (2) umfaßt, das auf seiner unteren Seite zwei Vorsprünge (21) und auf seiner oberen Seite zwei Positionier-Ansätze (22) sowie zwei Haken (23) trägt, die Nuten (24) und ein Arretierteil aufweisen, das von einer Achse (3) gebildet wird, die in Eingriff mit den Nuten bringbar ist.

2. Vorrichtung nach Anspruch 1, dadurch gekennzeichnet, daß die Achse (3) durch ein Element (4) zum Verschließen der offenen Seite des Profiles (1) in ihrer Sperrlage gehalten wird.

3. Vorrichtung nach Anspruch 1 oder 2, dadurch gekennzeichnet, daß die Vorsprünge (21) Stifte aufweisen, die zum Boden hin gebogen sind und in Ausnehmungen (14) des Bodens (10) des Profiles (1) eingreifen.

4. Vorrichtung nach einem der Ansprüche 1 bis 3, dadurch gekennzeichnet, daß die Positionier-Ansätze (22) Parallelepipede sind und unter die Schienen (13) greifen.

5. Vorrichtung nach einem der vorhergehenden Ansprüche, dadurch gekennzeichnet, daß die Haken (23) soweit auseinanderstehen, daß sie an der Außenseite der Schienen (13) gegen den in Richtung auf den Boden (10) des Profiles gerichteten zurücklaufenden Abschnitt des Profiles, den sie darstellen, positioniert werden können.

6. Vorrichtung nach einem der vorhergehenden Ansprüche, dadurch gekennzeichnet, daß die Achse (3) in Aufnahmen angeordnet ist, die von den Nuten (24) der Haken (23) und von Unterbrechungen (15) gleicher Breite in den Schienen (13) gebildet werden.

## Claims

1. A closure device for the end of a profile (1) of U-shaped section having a base (10) and two wings (12) provided close to the open face of the profile of a rail (13) turned towards the base (10), characterised in that it has an endpiece (2) having on its lower side two lugs (21) and on its upper side two positioning pegs (22) and two hooks (23) having grooves (24) and a stop member formed by a shaft (3) engaging in the grooves.

2. A device according to Claim 1, characterised in that the shaft (3) is held in its stop position by an element (4) for closing the open face of the profile (1).

3. A device according to Claim 1 or 2, characterised in that the lugs (21) have downwardly turned pips engaging in recesses (14) in the base (10) of the profile (1).

4. A device according to any one of Claims 1 to 3, characterised in that the positioning pegs (22) are parallelepipedic and engage under the rails (13).

5. A device according to any one of the preceding Claims, characterised in that the hooks (23) are spaced at a distance such that they can be positioned externally of the rails (13) against the returns thereof directed towards the base (10).

6. A device as according to any one of the preceding Claims, in that the shaft (3) is located in housings formed by the grooves (24) of the hooks (23) and by gaps (15) of the same width in the rails (13).
